# FASCICULE DE BREVET EUROPEEN

(11) **EP 1 510 744 B1**
(45) Date de publication et mention de la délivrance du brevet: **13.09.2006**
(21) Numéro de dépôt: 04300467.0
(22) Date de dépôt: 23.07.2004
(51) Int. Cl.: F16L 19/025, F16L 19/02, F02M 55/00

(54) **Agencement pour le raccordement de l'extrémité inférieure d'un tuyau sur un embout**
Anordnung für Verbindung eines Rohrendanschlags zum Verbindungsstück
Arrangement for connecting the bottom end of the pipe to a fitting

(30) Priorité: 29.08.2003 FR 0310308
(43) Date de publication de la demande: 02.03.2005
(73) Titulaire: Renault s.a.s., 92100 Boulogne Billancourt (FR)
(72) Inventeur: Zawisza,M. Waldemar, 75014, PARIS (FR)

(56) Documents cités:
- EP-A- 0 866 221
- EP-A- 1 045 188
- DE-A- 4 041 679
- FR-A- 2 196 053
- US-A- 2 398 555
- US-A- 5 709 413

## Description

La présente invention concerne un agencement pour le raccordement de l'extrémité inférieure d'un tuyau sur un embout.

La présente invention concerne plus particulièrement un agencement pour le raccordement de l'extrémité inférieure d'un tuyau sur un embout, notamment d'un tuyau de circuit d'injection en carburant sous pression d'un moteur à combustion interne de véhicule automobile.

L'agencement est du type comportant, axialement de bas en haut:
- un embout tubulaire délimitant un siège supérieur,
- une tête de liaison comportant une partie supérieure qui constitue un épaulement définissant avec l'extrémité inférieure du tuyau dont il est solidaire une zone dite de raccordement et une partie inférieure qui coopère de manière étanche avec le siège supérieur de l'embout,
- un organe de serrage axial, traversé par le corps tubulaire du tuyau et comportant une face inférieure qui exerce sur ledit épaulement un effort axial de serrage orienté vers le bas.

On connaît de nombreux exemples d'agencement conventionnel de ce type dans l'état de la technique, notamment pour un tuyau de circuit d'injection en carburant sous pression d'un moteur à combustion interne de véhicule automobile.

Un agencement selon le préambule de la revendication indépendante est décrit dans le document EP-A-1045188.

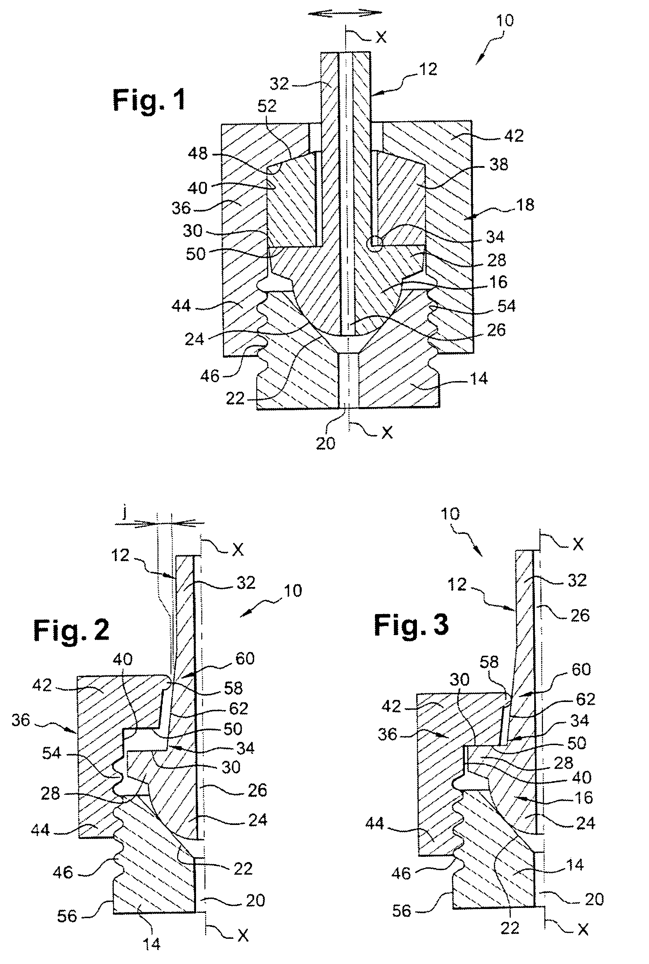

La figure 1 représente un tel exemple d'agencement 10 selon l'état de la technique de l'extrémité inférieure d'un tuyau en position serrée, c'est-à-dire en position de fonctionnement après raccordement sur un embout.

Cet agencement 10 est essentiellement constitué par un tuyau 12, un embout tubulaire 14, une tête de liaison 16, un organe de serrage 18,

Comme visible sur la vue en coupe de la figure 1, l'agencement 10 présente une symétrie axiale selon l'axe X-X.

L'embout tubulaire 14 comporte un canal d'injection 20, un siège supérieur 22 de forme tronconique avec lequel coopère de manière étanche une partie inférieure 24 de la tête de liaison 16 de forme globalement hémisphérique.

La tête de liaison 16, encore appelée « olive », comporte ainsi une partie inférieure 24 dans laquelle débouche un canal d'écoulement 26 du fluide sous pression assurant la communication entre le tuyau 12 et l'embout tubulaire 14.

La tête de liaison 16 comporte une partie supérieure 28 qui constitue un épaulement radial annulaire 30 orienté vers le haut définissant, avec l'extrémité inférieure du corps tubulaire 32 du tuyau 12 dont il est solidaire, une zone 34 dite de raccordement.

L'agencement 10 comporte un organe 18 de serrage axial qui est monté de manière imperdable et traversé à jeu radial par le corps tubulaire 32 du tuyau 12 et la tête de liaison 16.

L'organe de serrage 18 est ici constitué d'un écrou 36 et d'une bague intermédiaire de centrage 38 qui est interposée radialement entre une paroi intérieure 40 de l'écrou 36 et le corps tubulaire 32 du tuyau 12.

L'écrou 36 comporte un tronçon supérieur 42 et un tronçon inférieur taraudé 44 de serrage du tuyau 12 dont le taraudage 54 coopère avec un filetage 46 complémentaire de l'embout tubulaire 14.

Le tronçon supérieur 42 s'étend radialement vers l'intérieur au-delà de la paroi intérieure 40 de l'écrou 36 et il comporte une face inférieure 48 d'appui et de serrage.

La bague de centrage 38 comporte une face inférieure de serrage 50 et une face supérieure 52 avec laquelle coopère la face inférieure d'appui 48 de l'écrou 36 lors du serrage pour le raccordement pour exercer un effort de serrage globalement axial orienté vers le bas sur la face supérieure 52 de la bague 38 dont la face inférieure 50 exerce elle-même cet effort axial sur l'épaulement radial 30 de la tête de liaison 16.

Les faces inférieure d'appui 48 et supérieure 52 sont de forme tronconique dont les profils sont complémentaires et elles permettent d'assurer le centrage entre les différents éléments de l'agencement 10.

Un tel agencement 10 ne donne toutefois pas entière satisfaction pour différentes raisons, notamment de fiabilité.

En effet, on a pu constater à l'usage l'apparition de fissures sur les tuyaux qui provoquent des fuites plus ou moins importantes du fluide sous pression pouvant parfois entraîner des pannes.

Ces problèmes de fissuration se traduisent alors par des retours de pièces défectueuses qui ne sont pas compatibles avec les exigences actuelles de qualité et de sécurité des constructeurs automobile.

Ce phénomène de fissuration est principalement localisé dans la zone de raccordement 34 de l'épaulement radial 30 avec le corps tubulaire 32 du tuyau 12, Ainsi, dans un tel agencement 10, les contraintes mécaniques les plus importantes sont concentrées pour l'essentiel dans la zone de raccordement 34 et dues notamment à l'effort de serrage axial.

De plus, lorsque le moteur est en fonctionnement, le tuyau 12 est plus particulièrement soumis à des sollicitations vibratoires importantes selon une direction radiale autour de l'axe X-X, qui ne font qu'augmenter les contraintes mécaniques s'exerçant dans la zone de raccordement 34.

Ainsi, on peut distinguer deux sources principales à l'origine des contraintes mécaniques qui se superposent dans la zone de raccordement 34.

Il y a d'une part des contraintes en flexion qu'engendrent les vibrations transmises au tuyau 12 et, d'autre part des contraintes dues à l'effort axial exercé sur l'épaulement radial 30 de la tête de liaison 16.

De surcroît, la zone de raccordement 34 est une zone qui est déjà sollicitée mécaniquement en ce qu'elle subit une forte déformation plastique au moment du formage de la tête de liaison 16 par emboutissage de l'extrémité inférieure du corps tubulaire 32 du tuyau 12.

Afin de résoudre ces problèmes, l'invention propose un agencement de raccordement 10 du type décrit précédemment, caractérisé en ce que l'organe de serrage comporte dans son tronçon supérieur une collerette qui est traversée radialement par le corps tubulaire du tuyau et qui délimite intérieurement, avec le corps tubulaire situé en regard, une zone d'appui décalée axialement vers le haut par rapport à la zone de raccordement de l'épaulement de la tête de liaison avec le tuyau.

Avantageusement, la zone d'appui est une zone qui n'a pas été affectée lors de la fabrication, notamment lors du formage de la tête de liaison.

Grâce à l'invention, on découple les contraintes mécaniques qui s'exercent en deux zones distinctes, c'est à dire respectivement les contraintes dues à la flexion dans la zone d'appui et les contraintes dues au serrage dans la zone de raccordement.

De plus, la longueur libre du tuyau est réduite de sorte que les fréquences propres du tuyau sont avantageusement augmentées.

Avantageusement, on réduit la valeur des contraintes s'exerçant dans la zone de raccordement et on améliore la résistance à la fatigue due aussi à la pression interne exercée par le fluide sous pression.

De préférence, lorsque l'agencement de raccordement est du type comportant une bague de centrage, il est possible de la modifier de manière simple et économique.

Selon d'autres caractéristiques de l'invention :
- l'agencement comporte un jeu « j » entre la collerette supérieure de l'organe de serrage et la zone d'appui du corps tubulaire du tuyau ;
- l'organe de serrage est constitué par un écrou qui comporte un tronçon inférieur de serrage du tuyau sur l'embout ;
- une bague intermédiaire de centrage qui comporte une tête supérieure dont est solidaire la collerette et un talon inférieur dont est solidaire la face inférieure exerçant sur l'épaulement un effort axial de serrage, est interposée entre le corps tubulaire du tuyau et l'écrou ;
- le talon inférieur de la bague de centrage est relié à la tête supérieure par une portion amincie radialement de manière à ce que, lors du serrage du tuyau sur l'embout, la bague se déforme radialement vers l'intérieur jusqu'à ce que la collerette vienne au plus au contact de la zone d'appui du corps tubulaire du tuyau ;
- la portion amincie délimite un évidement qui est ouvert globalement radialement vers l'intérieur ;
- la tête de la bague de centrage comporte une face supérieure avec laquelle coopère une face inférieure complémentaire de l'écrou lors du serrage de manière à permettre le centrage par rapport au corps tubulaire du tuyau ;
- des moyens élastiques sont interposés entre la collerette et la zone d'appui du corps tubulaire du tuyau ;
- les moyens élastiques sont constitués par un anneau élastomère ;
- les moyens élastiques coopèrent avec la zone d'appui du corps tubulaire du tuyau de manière à constituer des moyens d'étanchéité.

D'autres caractéristiques et avantages de l'invention apparaîtront à la lecture de la description détaillée qui suit pour la compréhension de laquelle on se reportera aux dessins annexés dans lesquels:
- la figure 1 est une vue en coupe axiale d'un agencement de raccordement illustrant l'état de la technique ;
- les figures 2 et 3 sont des vues en coupe axiale d'un agencement de raccordement selon un premier mode de réalisation de l'invention, respectivement en position non raccordée et en position serrée, et dans lequel la collerette est solidaire d'un écrou formant l'organe de serrage;
- les figures 4 et 5 sont des vues en coupe axiale d'un agencement de raccordement selon un second mode de réalisation de l'invention, respectivement en position non raccordée et en position serrée, et dans lequel la collerette est solidaire d'une bague de centrage qui est interposée radialement entre un écrou formant l'organe de serrage et le tuyau ;
- les figures 6 et 7 sont des vues en coupe axiale d'un organe de serrage selon les premier et second modes de réalisation, dont sont solidaires des moyens élastiques interposés entre la collerette et la zone d'appui selon l'invention.

Dans la description et dans les revendications, on utilisera à titre non limitatif pour en faciliter la compréhension les expressions telles que supérieur et inférieur, axial et radial, ainsi que les directions en référence aux figures et définitions données dans la description dans laquelle les éléments identiques, similaires ou analogues seront désignés par les mêmes chiffres de référence.

On procèdera, dans la description qui va suivre, par comparaison successive entre les modes de réalisation selon l'invention et l'état de la technique illustré à la figure 1.

Ainsi, l'agencement 10 pour le raccordement de l'extrémité du tuyau 12 sur l'embout 14 selon la figure 2, illustrant un premier mode de réalisation, se distingue de celui de la figure 1 en ce que l'organe de serrage axial 18 ne comporte ici pas de bague de centrage 38 mais seulement un écrou 36.

Conformément à l'invention, le tronçon supérieur 42 de l'écrou 36 comporte une collerette 58 radiale intérieure qui est traversée axialement par le corps tubulaire 32 du tuyau 12 et qui délimite intérieurement avec le corps tubulaire 32 situé en regard une zone d'appui 60 décalée axialement vers le haut par rapport à la zone de raccordement 34 de l'épaulement 30 de la tête de liaison 16 avec le tuyau 12.

Le corps tubulaire 32 comporte une paroi extérieure tronconique 62, comprise axialement entre la zone d'appui 60 et la zone de raccordement 34 et qui est inclinée vers l'extérieur dans un sens tel que le corps tubulaire 32 soit radialement plus large dans la zone de raccordement 34 que dans la zone d'appui 60.

Avantageusement, la tenue mécanique de la zone de raccordement 34 est améliorée par le fait que le corps tubulaire 32 y soit plus épais.

Lorsque l'on procède au serrage de l'écrou 36 sur l'embout 14, le jeu radial « j » existant entre la collerette supérieure 58 et la paroi extérieure 62 se réduit progressivement jusqu'à ce que l'on parvienne à la position serrée de la figure 3.

Dans cette position, il subsiste un faible jeu entre la collerette supérieure 58 de l'écrou 36 et la zone d'appui 60 du corps tubulaire 32 du tuyau 12.

En variante, le jeu est quasiment nul et la collerette 58 est en appui radial sur la zone 60 sur la paroi extérieure 62 du corps tubulaire 32.

Ainsi qu'on l'aura compris, lorsque le tuyau 12 est maté et soumis à des sollicitations vibratoires importantes selon une direction radiale autour de l'axe X-X, la collerette supérieure 58 limite les débattements dus aux vibrations en créant une zone d'appui 60 décalée axialement par rapport à la zone de raccordement 34 de manière à répartir sur ces deux zones les contraintes mécaniques, notamment de flexion, subit par l'agencement 10.

Les contraintes s'exerçant dans la zone de raccordement 34 sont alors pour l'essentiel constituées par les contraintes dues à l'effort axial exercé par la face inférieure de serrage 50 de l'écrou 36 sur l'épaulement 30 de la tête de liaison 16.

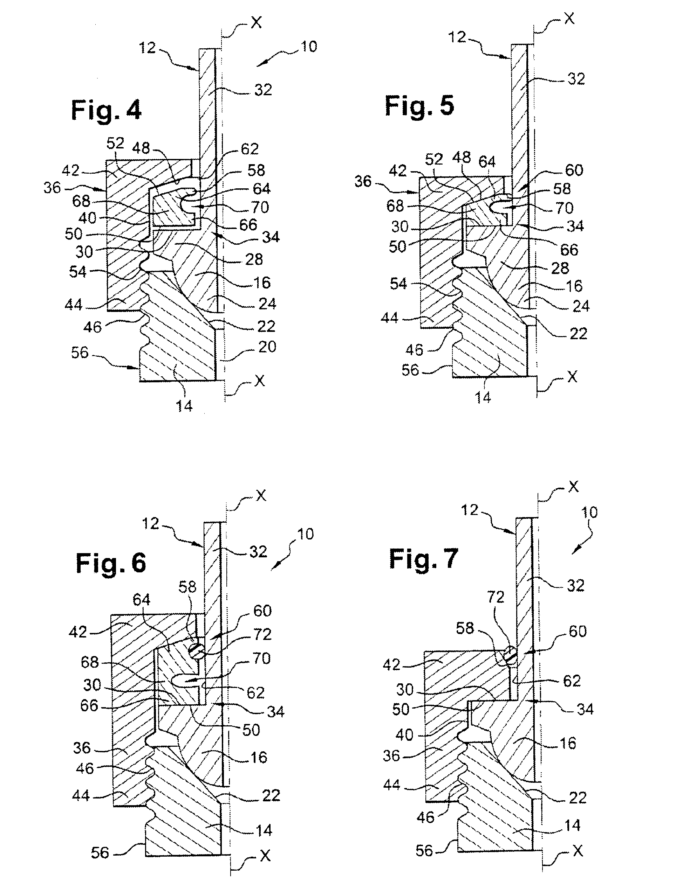

On décrira maintenant l'agencement 10 selon un second mode de réalisation représenté aux figures 4 et 5 par comparaison avec l'agencement de la figure 1.

La bague intermédiaire de centrage 38 comporte ici une tête supérieure 64 dont est solidaire une collerette 58, analogue à celle décrite aux figures 2 et 3, et un talon inférieur 66 auquel appartient la face inférieure de serrage 50.

Conformément à un aspect de l'invention, le talon inférieur 66 de la bague 38 est relié à la tête supérieure 64 par une portion amincie radialement 68 de manière que, lors du serrage du tuyau 12 sur l'embout 14, la bague 38 se déforme radialement vers l'intérieur jusqu'à ce que la collerette 58 se « resserre » radialement vers la zone d'appui 60 de la paroi extérieure 62 du corps tubulaire 32 du tuyau 12.

Comme visible sur les figures 4 et 5, la portion amincie 68 délimite un évidement 70 qui est ouvert globalement radialement vers l'intérieur.

Lorsqu'on procède au serrage de l'agencement 10 comme précédemment, la face supérieure tronconique 52 que comporte la tête 64 de la bague intermédiaire 38 coopère avec la face inférieure complémentaire d'appui 48 de l'écrou 36 de manière à permettre un auto-centrage de l'écrou 36 et de la bague 38 par rapport au corps tubulaire 32 du tuyau 12.

Avantageusement, il est possible de mettre en oeuvre de manière simple et économique ce second mode de réalisation en ne modifiant que la bague intermédiaire de centrage 38 selon l'état de la technique, tout les autres composants de l'agencement 10 étant analogues.

On a représenté aux figures 6 et 7, une variante de réalisation des organes de serrage 18 comportant la collerette 58 selon les premier et second modes de réalisation décrits précédemment.

Selon cette variante, des moyens élastiques 72 sont interposés radialement entre la collerette 58 et la zone d'appui 60 du corps tubulaire 32 du tuyau 12 et qui sont par exemple constitués par un anneau élastomère.

Grâce à un tel anneau élastomère 72, on évite tout risque de détérioration de la surface de la zone d'appui 60 par la collerette 58 et on réalise un contact amorti entre la collerette 58 et la zone d'appui 60 puisque l'anneau est déformable élastiquement, notamment selon la direction radiale .

Avantageusement, les moyens élastiques 72 coopèrent avec la zone d'appui 60 du corps tubulaire 32 du tuyau 12 de manière à constituer des moyens d'étanchéité.

## Revendications

1. Agencement (10) pour le raccordement de l'extrémité inférieure d'un tuyau (12) sur un embout (14), notamment d'un tuyau de circuit d'injection en carburant sous pression d'un moteur à combustion interne de véhicule automobile, du type comportant axialement de bas en haut :
- un embout tubulaire (14) délimitant un siège supérieur (22),
- une tête de liaison (16) comportant une partie supérieure (28) qui constitue un épaulement (30) définissant avec l'extrémité inférieure du tuyau (12) dont il est solidaire une zone (34) dite de raccordement et une partie inférieure (24) qui coopère de manière étanche avec le siège supérieur (22) de l'embout (14),
- un organe de serrage axial (18), traversé par le corps tubulaire (32) du tuyau (12) et comportant une face inférieure (50) qui exerce sur ledit épaulement (30) un effort axial de serrage orienté vers le bas,
**caractérisé en ce que** l'organe de serrage (18) comporte dans son tronçon supérieur (42) une collerette (58) qui est traversée radialement par le corps tubulaire (32) du tuyau (12) et qui délimite intérieurement, avec le corps tubulaire (32) situé en regard, une zone d'appui (60) décalée axialement vers le haut par rapport à la zone de raccordement (34) de l'épaulement (30) de la tête de liaison (16) avec le tuyau (12).

2. Agencement selon la revendication 1, **caractérisé en ce qu**'il comporte un jeu « j » entre la collerette supérieure (58) de l'organe de serrage (18) et la zone d'appui (60) du corps tubulaire (32) du tuyau (12).

3. Agencement selon l'une des revendications 1 ou 2, **caractérisé en ce que** l'organe de serrage (18) est constitué par un écrou (36) qui comporte un tronçon inférieur (44) de serrage du tuyau (12) sur l'embout (14).

4. Agencement selon la revendication 3, **caractérisé en ce qu**'une bague intermédiaire de centrage (38) qui comporte une tête supérieure (64) dont est solidaire la collerette (58) et un talon inférieur (66) dont est solidaire la face inférieure (50) exerçant sur l'épaulement (30) un effort axial de serrage, est interposée entre le corps tubulaire (32) du tuyau (12) et l'écrou (36).

5. Agencement selon la revendication 4, **caractérisé en ce que** le talon inférieur (66) de la bague de centrage (38) est relié à la tête supérieure (64) par une portion amincie radialement (68) de manière à ce que, lors du serrage du tuyau (12) sur l'embout (14), la bague (38) se déforme radialement vers l'intérieur jusqu'à ce que la collerette (58) vienne au plus au contact de la zone d'appui (60) du corps tubulaire (32) du tuyau (12).

6. Agencement selon la revendication 5, **caractérisé en ce que** la portion amincie (68) délimite un évidement (70) qui est ouvert globalement radialement vers l'intérieur.

7. Agencement selon l'une des revendications 4 à 6, **caractérisé en ce que** la tête (64) de la bague de centrage (38) comporte une face supérieure (52) avec laquelle coopère une face inférieure (48) complémentaire de l'écrou (36) lors du serrage de manière à permettre le centrage par rapport au corps tubulaire (32) du tuyau (12).

8. Agencement selon l'une quelconque des revendications précédentes, **caractérisé en ce que** des moyens élastiques (72) sont interposés entre la collerette (58) et la zone d'appui (60) du corps tubulaire (32) du tuyau (12).

9. Agencement selon la revendication 8, **caractérisé en ce que** les moyens élastiques (72) sont constitués par un anneau élastomère.

10. Agencement selon l'une des revendications 8 ou 9, **caractérisé en ce que** les moyens élastiques (72) coopèrent avec la zone d'appui (60) du corps tubulaire (32) du tuyau (12) de manière à constituer des moyens d'étanchéité.

## Claims

1. An arrangement (10) for the connection of the lower end of a tube (12) to an end-piece (14), in particular of a tube of a pressurised fuel injection circuit of an internal combustion engine of an automobile vehicle, of the type comprising axially from bottom to top:
- a tubular end-piece (14) bounding an upper seat (22),
- a connecting head (16) comprising an upper portion (28) which forms a shoulder (30) defining, with the lower end of the tube (12) with which it is rigid, a connection zone (34), and a lower portion (24) which cooperates in a leak-tight manner with the upper seat (22) of the end-piece (14),
- an axial clamping member (18) traversed by the tubular body (32) of the tube (12) and comprising a lower surface (50) which exerts a downwardly oriented axial clamping force on the shoulder (30),
**characterised in that** the clamping member (18) comprises, in its upper section (42), a collar (58) which is radially traversed by the tubular body (32) of the tube (12) and which bounds internally, with the tubular body (28) disposed opposite, a bearing zone (60) offset axially upwards with respect to the connection zone (34) of the shoulder (30) of the connecting head (16) with the tube (12).

2. An arrangement as claimed in claim 1, **characterised in that** it comprises a play "j" between the upper collar (58) of the clamping member (18) and the bearing zone (60) of the tubular body (32) of the tube (12).

3. An arrangement as claimed in one of claims 1 or 2, **characterised in that** the clamping member (18) is formed by a nut (36) which comprises a lower section (44) clamping the tube (12) on the end-piece (14).

4. An arrangement as claimed in claim 3, **characterised in that** an intermediate centring ring (38), comprising an upper head (64) with which the collar (58) is rigid and a lower heel (66) with which the lower surface (50) exerting an axial clamping force on the shoulder (30) is rigid, is interposed between the tubular body (32) of the tube (12) and the nut (36).

5. An arrangement as claimed in claim 4, **characterised in that** the lower heel (66) of the centring ring (38) is connected to the upper head (64) by a radially thinner portion (68) so that, when the tube (12) is clamped on the end-piece (14), the ring (38) is radially inwardly deformed until the collar (58) comes at most into contact with the bearing zone (60) of the tubular body (32) of the tube (12).

6. An arrangement as claimed in claim 5, **characterised in that** the thinner portion (68) bounds a recess (70) which is substantially radially outwardly open.

7. An arrangement as claimed in one of claims 4 to 6, **characterised in that** the head (64) of the centring ring (38) comprises an upper surface (52) which cooperates with a complementary lower surface (48) of the nut (36) during clamping in order to enable centring with respect to the tubular body (32) of the tube (12).

8. An arrangement as claimed in any one of the preceding claims, **characterised in that** resilient means (72) are interposed between the collar (58) and the bearing zone (60) of the tubular body (32) of the tube (12).

9. An arrangement as claimed in claim 8, **characterised in that** the resilient means (72) are formed by an elastomer ring.

10. An arrangement as claimed in one of claims 8 or 9, **characterised in that** the resilient means (72) cooperate with the bearing zone (60) of the tubular body (32) of the tube (12) in order form leak-tight sealing means.

## Patentansprüche

1. Anordnung (10) für die Verbindung des unteren Endes eines Rohrs (12) an einem Ansatz (14), insbesondere eines Rohrs eines Einspritzkreislaufs für Kraftstoff unter Druck eines Verbrennungsmotors eines Kraftfahrzeugs, von der Art, welche axial von unten nach oben aufweist:
- einen röhrenförmigen Ansatz (14), welcher einen oberen Sitz (22) begrenzt;
- einen Verbindungskopf (16), welcher einen oberen Teil (28) aufweist, der eine Schulter (30) bildet, welche mit dem unteren Ende des Rohrs (12), mit dem er fest verbunden ist, eine als Verbindungszone (34) bezeichnete Zone definiert, und einen unteren Teil (24), welcher auf dichte Art und Weise mit dem oberen Sitz (22) des Ansatzes (14) zusammenwirkt;
- ein axiales Spannbauteil (18), welches von dem röhrenförmigen Körper (32) des Rohrs (12) durchquert wird und eine untere Fläche (50) aufweist, welche auf die Schulter (30) eine axiale Spannkraft ausübt, die in Richtung nach unten gerichtet ist,
**dadurch gekennzeichnet, dass** das Spannbauteil (18) in seinem oberen Teilstück (42) einen Kragen (58) aufweist, welcher radial von dem röhrenförmigen Körper (32) des Rohrs (12) durchquert wird und welcher innen mit dem röhrenförmigen Körper (32), welcher gegenüberliegend angeordnet ist, eine Abstützzone (60) begrenzt, welche axial in Richtung nach oben im Verhältnis zu der Verbindungszone (34) der Schulter (30) des Verbindungskopfs (16) mit dem Rohr (12) versetzt ist.

2. Anordnung nach Anspruch 1, **dadurch gekennzeichnet, dass** sie ein Spiel "j" zwischen dem oberen Kragen (58) des Spannbauteils (18) und der Abstützzone (60) des röhrenförmigen Körpers (32) des Rohrs (12) aufweist.

3. Anordnung nach einem der Ansprüche 1 oder 2, **dadurch gekennzeichnet, dass** das Spannbauteil (18) durch eine Mutter (36) gebildet ist, welche ein unteres Teilstück (44) zur Spannung des Rohrs (12) an dem Ansatz (14) aufweist.

4. Anordnung nach Anspruch 3, **dadurch gekennzeichnet, dass** ein Zwischenzentrierring (38), welcher einen oberen Kopf (64) aufweist, mit dem der Kragen (58) fest verbunden ist, und einen unteren Ansatz (66), mit dem die untere Fläche (50) fest verbunden ist, welche auf die Schulter (30) eine axiale Spannkraft ausübt, zwischen den röhrenförmigen Körper (32) des Rohrs (12) und die Mutter (36) gesetzt ist.

5. Anordnung nach Anspruch 4, **dadurch gekennzeichnet, dass** der untere Ansatz (66) des Zentrierrings (38) mit dem oberen Kopf (64) über einen radial verjüngten Abschnitt (68) derart verbunden ist, dass während des Spannens des Rohrs (12) auf dem Ansatz (14) der Ring (38) sich radial in Richtung nach innen verformt, bis der Kragen (58) am stärksten mit der Abstützzone (60) des röhrenförmigen Körpers (32) des Rohrs (12) in Kontakt tritt.

6. Anordnung nach Anspruch 5, **dadurch gekennzeichnet, dass** der verjüngte Abschnitt (68) eine Aussparung (70) begrenzt, welche im Allgemeinen radial in Richtung nach innen offen ist.

7. Anordnung nach einem der Ansprüche 4 bis 6, **dadurch gekennzeichnet, dass** der Kopf (64) des Zentrierrings (38) eine obere Fläche (52) aufweist, mit welcher eine untere komplementäre Fläche (48) der Mutter (36) während der Spannung derart zusammenwirkt, um die Zentrierung im Verhältnis zu dem röhrenförmigen Körper (32) des Rohrs (12) zu erlauben.

8. Anordnung nach irgendeinem der vorangegangenen Ansprüche, **dadurch gekennzeichnet, dass** elastische Mittel (72) zwischen den Kragen (58) und die Abstützzone (60) des röhrenförmigen Körpers (32) des Rohrs (12) gesetzt sind.

9. Anordnung nach Anspruch 8, **dadurch gekennzeichnet, dass** die elastischen Mittel (72) durch einen elastomeren Ring gebildet sind.

10. Anordnung nach einem der Ansprüche 8 oder 9, **dadurch gekennzeichnet, dass** die elastischen Mittel (72) mit der Abstützzone (60) des röhrenförmigen Körpers (32) des Rohrs (12) derart zusammenwirken, um Abdichtungsmittel zu bilden.
